# EUROPEAN PATENT APPLICATION

(11) **EP 4 428 997 A1**
(43) Date of publication of application: **11.09.2024**
(21) Application number: 22890184.9
(22) Date of filing: 27.09.2022
(51) Int. Cl.: H01M 50/129, H01M 50/14, H01M 50/131, B32B 15/085, H01M 50/105

(54) **SECONDARY BATTERY PACKAGING MATERIAL**

(30) Priority: 05.11.2021 KR 20210151769
(71) Applicant: Lotte Chemical Corporation, Seoul 05551 (KR)
(72) Inventor: CHO, Jin Ju, Daejeon 34110 (KR); KIM, Min Kyu, Daejeon 34110 (KR); BYUN, Ju Yi, Daejeon 34110 (KR); KIM, Song Ho, Daejeon 34110 (KR)
(74) Representative: Germain Maureau
(86) International application number: PCT/KR2022/014485
(87) International publication number: WO 2023/080449

(57) **Abstract**

Disclosed is a secondary battery packaging material having a layered structure including an outer layer made from a heat-resistant resin film, a metal foil gas barrier layer, and an inner layer made from a composition containing a thermoplastic polyolefin, the packaging material being heat-sealable in low heat-sealing temperature conditions and exhibiting improved heat resistance and shape stability in a high-temperature environment. The present invention provides a secondary battery packaging material having a layered structure including an outer layer made from a heat-resistant resin film, a metal foil gas barrier layer, and an inner layer made from a composition containing a thermoplastic polyolefin, wherein the composition constituting the inner layer has at least three endothermic peaks in a temperature-calorie curve when measured by successive self-nucleation and annealing (SSA) using differential scanning calorimetry (DSC), wherein the endothermic peaks appear in the range of 90 °C to 180 °C.

## Description

### TECHNICAL FIELD

The present invention relates to a secondary battery packaging material, and more specifically, to a secondary battery packaging material having a layered structure including an outer layer, a metal foil gas barrier layer, and an inner layer.

This application claims the benefit of Korean Patent Application No. 10-2021-0151769, filed on November 5, 2021, in the Korean Intellectual Property Office, the disclosure of which is incorporated herein in its entirety by reference.

### BACKGROUND ART

A secondary battery generally refers to a lithium secondary battery, and is a battery used in a portable terminal device such as a laptop, a smart phone, a tablet PC, and a video camera, an electric vehicle including a hybrid vehicle, a smart grid for energy storage, and the like, and research has been conducted to overcome various environmental factors such as a severe thermal environment and a mechanical impact while making the battery smaller, lighter, and thinner.

As a packaging material used for such a lithium battery, a pouch for a secondary battery is used as an exterior material having a multi-layered structure (e.g., an inner resin layer, an aluminum layer, and an outer resin layer) due to advantages of being different from a typical can-type packaging material and being able to freely change the shape of the battery. A commonly-used pouch film for a secondary battery is composed of a multi-layered structure sequentially having an inner resin layer composed of an adhesive layer by a polyolefin such as polyethylene (PE), casted polypropylene (cPP), polypropylene (PP), or the like, or a copolymer thereof, which has heat adhesion, thereby serving as a sealing agent, an aluminum layer, which is a metal foil layer serving as a substrate for maintaining mechanical strength and a barrier layer against moisture and oxygen, and an outer resin layer made from a functional polymer film such as polyethylene terephthalate (PET), polyethylene naphthalate (PEN), nylon, a liquid crystal polymer (LCP) resin, or the like, which is to protect a battery cell from an external impact.

Typically, a packaging material in which a metal, aluminum in particular, is press-processed to be molded into a cylindrical or parallelepiped shape, or the like has been mainly used. However, in the case of such a metal-material can packaging material, there is a limitation in that the outer wall of a container is hard so that the shape of a battery itself is determined by the shape of the metal-material can packaging material.

In order to overcome such a limitation, a technology for packaging materials made of multi-layer plastic films has been developed. For example, Korean Patent Laid-Open Publication No. 2003-0029141 discloses a cell pouch composed of a base layer, an adhesive layer, a barrier layer, a dry lamination layer, and a sealant layer, wherein the sealant layer is composed of a low-fluidity polypropylene layer and a high-fluidity polypropylene layer, and Korean Patent Laid-Open Publication No. 2002-0030737 discloses a cell pouch in which a base film and a surface protection layer are laminated using biaxially stretched nylon, polyethylene terephthalate (PET) and polyolefin resins, and a technology of coating the base film with a fluorine-based, silicone-based, or acrylic resin as a secondary processing.

A pouch-type secondary battery may have flexibility in its form, and has the advantage of implementing a secondary battery of the same capacity with a smaller volume and mass. However, unlike a can-type secondary battery, the pouch-type secondary battery uses a soft pouch as a container, and thus may be damaged for various reasons in various processes. For example, during a process of accommodating an electrode assembly inside a pouch, a protruding portion such as an electrode tab or an electrode lead causes damage such as cracks to PP and cPP layers inside the pouch, and when an aluminum layer is exposed due to such damage, a side reaction occurs due to reactivity with an electrolyte solution. The aluminum layer exposed to the electrolyte solution as described above may be corroded by causing a chemical reaction with the electrolyte solution, and oxygen or moisture penetrated or diffused into a battery, through which a corrosive gas is generated, resulting in a problem of causing a swelling phenomenon in which the inside of the battery expands. Specifically, lithium hexafluorophosphate (LiPF₆) may react with water and oxygen to generate hydrofluoric acid (HF), which is a corrosive gas. The hydrofluoric acid may react with aluminum and cause a rapid exothermic reaction, and as a secondary reaction, when the hydrofluoric acid is adsorbed to the surface of the aluminum and penetrates into a tissue, the brittleness of the tissue increases so that cracks may be generated in a pouch film even by a micro-impact, and due to the leakage of the electrolyte solution, lithium and the atmosphere may react to cause ignition.

Korean Patent No. 1499740 discloses a polymer film for a cell packaging material including 1 wt% to 30 wt% of low-density polyethylene (LDPE), 50 wt% to 98 wt% of polypropylene (PP), and 1 wt% to 20 wt% of a cross-linked resin, wherein the LDPE is used to lower the penetration rate of an electrolyte solution, the PP is used to supplement heat resistance, and the cross-linked resin is used to increase the compatibility between LDPE and PP, but does not specifically disclose changes in physical properties in accordance with the molecular weight, density, melting point, degree of crystallinity, comonomer content, and the like.

Japanese Patent No. 6808966 discloses a battery packaging material composed of a laminate in which a base layer, a metal layer, and a sealant layer are sequentially laminated, wherein a plurality of types of fatty acid amide-based lubricants are present in the sealant layer, and at least one type of the fatty acid amide-based lubricants is a saturated fatty acid amide, but when an extrusion lamination process is used, there is a possibility that fatty acid amides will volatilize and lose slip properties.

Japanese Patent No. 5761278 discloses a resin composition for a sealant layer of a battery packaging material, wherein a first sealant layer is made from an acid-modified polyolefin and a second sealant layer includes a polyolefin resin having an isotactic fraction (mm) of 99% or less, but since the isotactic fraction of a polyolefin resin which may be commercialized or synthesized is not more than 99%, it is difficult to specifically identify the category of the polyolefin resin having an isotactic fraction (mm) of 99% or less.

### DISCLOSURE OF THE INVENTION

### TECHNICAL PROBLEM

An aspect of the present invention provides a secondary battery packaging material having a layered structure including an outer layer made from a heat-resistant resin film, a metal foil gas barrier layer, and an inner layer made from a composition containing a thermoplastic polyolefin, the packaging material being heat-sealable in low heat-sealing temperature conditions while exhibiting improved heat resistance and shape stability in a high-temperature environment.

### TECHNICAL SOLUTION

According to an aspect of the present invention, there is provided a secondary battery packaging material having a layered structure including an outer layer made from a heat-resistant resin film, a metal foil gas barrier layer, and an inner layer made from a composition containing a thermoplastic polyolefin, wherein the composition constituting the inner layer has at least three endothermic peaks in a temperature-calorie curve when measured by successive self-nucleation and annealing (SSA) using differential scanning calorimetry (DSC), wherein the endothermic peaks appear in the range of 90 °C to 180 °C.

In addition, when analyzed by the successive self-nucleation and annealing, the composition constituting the inner layer has, based on the sum of the area of all peaks, a region including endothermic peaks below 100 °C in not more than 10%, and a region including endothermic peaks above 150 °C in more than 20% but less than 90%.

In addition, the composition constituting the inner layer includes at least one type of acid-modified polypropylene.

In addition, the acid-modified polypropylene is a modified polypropylene grafted with 1 wt% to 10 wt% of maleic anhydride.

In addition, the heat-resistant resin is a polyamide-based resin or a polyester-based resin.

In addition, the metal foil includes at least one metal selected from the group consisting of aluminum (Al), iron (Fe), copper (Cu), nickel (Ni), tin (Sn), zinc (Zn), indium (In), and tungsten (W).

In addition, the thickness of the outer layer is 15 um to 30 µm, the thickness of the metal foil gas barrier layer is 25 um to 45 um, and the thickness of the inner layer is 25 um to 120 µm.

### ADVANTAGEOUS EFFECTS

According to the present invention, in a secondary battery packaging material having a layered structure including an outer layer made from a heat-resistant resin film, a metal foil gas barrier layer, and an inner layer made from a composition containing a thermoplastic polyolefin, it is possible to provide the secondary battery packaging material which is heat-sealable in low heat-sealing temperature conditions while exhibiting improved heat resistance and shape stability in a high-temperature environment by presenting specific thermal properties when the composition constituting the inner layer is subjected to the measurement of successive self-nucleation and annealing using differential scanning calorimetry.

### BRIEF DESCRIPTION OF THE DRAWINGS

FIG. 1 is a graph exemplarily showing a case in which a melting behavior of 3 folds or more is not seen from the result of measuring successive self-nucleation and annealing (SSA) using differential scanning calorimetry (DSC).

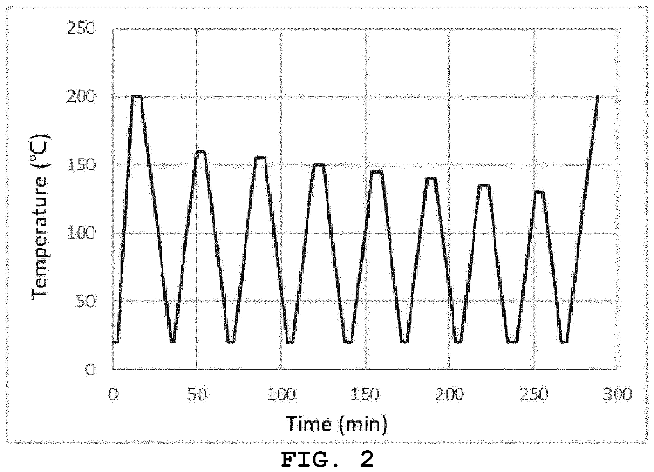

FIG. 2 is a graph exemplarily showing a heat treatment process in successive self-nucleation and annealing (SSA) using differential scanning calorimetry (DSC).

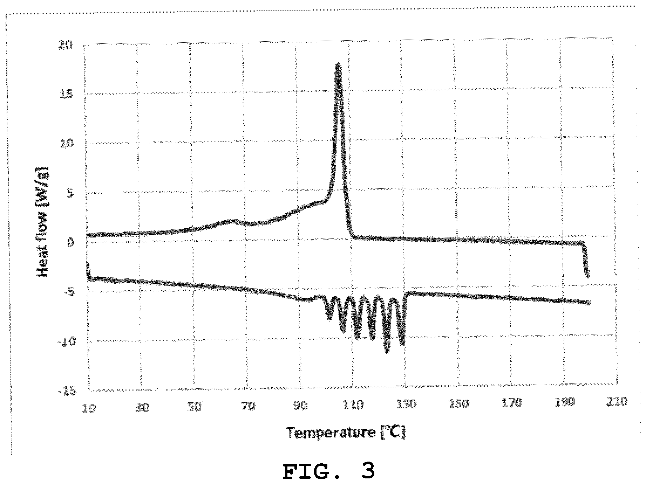

FIG. 3 is a graph exemplarily showing a case in which a melting behavior of 3 folds or more is seen from the result of measuring successive self-nucleation and annealing (SSA) using differential scanning calorimetry (DSC).
FIG. 4 is a graph showing the result of measuring successive self-nucleation and annealing (SSA) using differential scanning calorimetry (DSC) with respect to an inner layer in Example 1.
FIG. 5 is a graph showing the result of measuring successive self-nucleation and annealing (SSA) using differential scanning calorimetry (DSC) with respect to an inner layer in Example 2.
FIG. 6 is a graph showing the result of measuring successive self-nucleation and annealing (SSA) using differential scanning calorimetry (DSC) with respect to an inner layer in Example 3.
FIG. 7 is a graph showing the result of measuring successive self-nucleation and annealing (SSA) using differential scanning calorimetry (DSC) with respect to an inner layer in Example 4.
FIG. 8 is a graph showing the result of measuring successive self-nucleation and annealing (SSA) using differential scanning calorimetry (DSC) with respect to an inner layer in Comparative Example 1.
FIG. 9 is a graph showing the result of measuring successive self-nucleation and annealing (SSA) using differential scanning calorimetry (DSC) with respect to an inner layer in Comparative Example 2.

### BEST MODE FOR CARRYING OUT THE INVENTION

Hereinafter, the present invention will be described in detail with reference to preferred embodiments. Prior to this, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention. Therefore, the configurations of the embodiments described herein are merely the most preferred embodiments of the present invention, and are not intended to limit the technical idea of the present invention. Therefore, it should be understood that there may be various equivalents and modifications that may substitute the embodiments at the time of the present application.

The present invention discloses a secondary battery packaging material as a lithium secondary battery packaging material having a layered structure including an outer layer made from a heat-resistant resin film, a metal foil gas barrier layer, and an inner layer made from a composition containing a thermoplastic polyolefin, wherein the composition constituting the inner layer has at least three endothermic peaks in a temperature-calorie curve obtained through successive self-nucleation and annealing (SSA) measurement using nucleation/annealing by differential scanning calorimetry (DSC), wherein the endothermic peaks appear in the range of 90 °C to 180 °C.

The inner layer corresponds to the innermost component in the lithium secondary battery packaging material, and is a layer made from a composition containing a thermoplastic polyolefin in contact with an electrolyte solution of the battery, and is thermally bonded for the purpose of sealing the lithium secondary battery.

The composition containing a thermoplastic polyolefin, the inner layer of the lithium secondary battery packaging material according to the present invention, has at least three endothermic peaks in a temperature-calorie curve when measured by successive self-nucleation and annealing (SSA) using differential scanning calorimetry (DSC). That is, in the lithium secondary battery packaging material according to the present invention, the composition containing a thermoplastic polyolefin of the inner layer exhibits three or more melting behaviors, which may be observed using a DSC device.

At this time, it is preferable that the composition constituting the inner layer has, based on the sum of the area of all peaks, a region including endothermic peaks below 100 °C in not more than 10%, and a region including endothermic peaks above 150 °C in more than 20% but less than 90%.

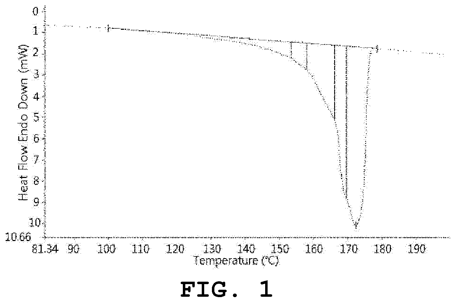

For example, the result of SSA measurement as shown in FIG. 1 shows a temperature-calorie curve in which a region not showing a melting behavior of 3 folds or more, but including endothermic peaks above 150°C is 90% or more with respect to the area of the total peaks, and when an inner layer made from a composition exhibiting the above-described result of SSA measurement is used, it is difficult to implement a secondary battery packaging material with improved heat sealability, heat resistance, and shape stability, which is the purpose to be achieved by the present invention.

Here, the temperature-calorie curve obtained through successive self-nucleation and annealing using differential scanning calorimetry shows the result of obtaining more precise crystal information, wherein a thermoplastic resin to be analyzed is repeatedly heated and cooled using DSC from/to room temperature to/from a sufficiently high temperature, such as about 200 °C, at a rate of 10°C per minute, and maintained (holding) for a certain period of time at 10 °C intervals at a specific temperature, such as 180 °C, 170 °C, and 160°C, to be subjected to self-nucleation and annealing. That is, if the thermoplastic resin is heated and completely melted, and then cooled to a specific temperature (T) and gradually annealed, lamellas which are not stable at the corresponding temperature (T) are still molten, and only the stable lamellas are crystallized, at which time the stability for the corresponding temperature (T) depends on the thickness of a lamella, and the thickness of the lamella depends on a chain structure. Therefore, by performing the above-described heat treatment step by step, it is possible to quantitatively measure the thickness and distribution of lamellas according to a polymer chain structure, and accordingly, to measure the distribution of the area of each melting peak.

In the present invention, in the secondary battery packaging material having a layered structure including an outer layer made from a heat-resistant resin film, a metal foil gas barrier layer, and an inner layer made from a composition containing a thermoplastic polyolefin, the inner layer is separately separated and subjected to successive self-nucleation and annealing using differential scanning calorimetry, and since the inner layer is the result of including not only a crystal structure by the chemical composition of the composition itself, which contains a thermoplastic polyolefin, but also a crystal structure with respect to phenomena in which the resin has been molded and heat-treated, so that thermal-annealing heat-treatment is performed at a sufficiently high temperature above the melting point at room temperature to remove the history of molding and heat-treating the resin. The thermoplastic resin is held at a temperature higher than the melting point thereof for a sufficient amount of time, for example, for about 3 minutes to 60 minutes. After the thermal annealing, heat treatment is performed by cooking the thermoplastic resin to room temperature at the same rate as the temperature rise, and the temperature of the holding section is lowered at specific temperature intervals until the temperature reaches room temperature to impart self-nucleation and annealing.

Through the above-described heat treatment, the composition constituting the inner layer changes from exhibiting a melting behavior that shows an endothermic peak only at the melting point to exhibiting multiple melting behaviors of a thermoplastic resin that show an endothermic phase transition at a phase transition temperature lower than the melting point.

This shows that the composition constituting the inner layer of the present invention may be thermally bonded below the melting point due to the confirmation of the endothermic phase transition peak that appears at a temperature lower than the intrinsic resin melting point. It also shows that the composition has multiple endothermic phase transitions in the range of 90 °C to 180 °C, and thus, is able to be adhered under a wide range of adhesion temperature conditions. In addition, the composition has a region including endothermic peaks above 150 °C in more than 20% but less than 90%, and thus, has mechanical rigidity and heat resistance, thereby allowing excellent thermal bonding strength to be exhibited after the inner layer is thermally adhered.

Meanwhile, in the present invention, the composition containing a thermoplastic polyolefin and constituting the inner layer may be formed in multiple layers, preferably two or three layers.

In the present invention, the composition constituting the inner layer includes at least one type of acid-modified polypropylene, and may include, as a functional group of an acid-modified group, a modified polypropylene grafted with 1 wt% to 10 wt%, preferably 3 wt% to 5 wt% of maleic anhydride. If the content of the maleic anhydride is less than 1 wt%, the adhesion to the metal foil gas barrier layer may be degraded, and if greater than 10 wt%, fish eyes (F/E) and small molecules may be generated due to a large amount of polar functional groups, so that after corona surface-treatment, surface tension may be lowered, thereby degrading the adhesion to the metal foil gas barrier layer. Preferably, in the configuration of two or three layers, the composition may be formed in a layer that is in contact with a metal foil gas barrier layer.

The inner layer may have a thickness of approximately 25 um to 120 um for sufficient thermal bonding properties, but is not limited thereto, and may have a suitable thickness depending on the use of a cell pouch to be implemented, e.g., a thin-film cell pouch implemented in a total thickness of approximately 88 um, a general cell pouch implemented in a total thickness of approximately 113 um, or a medium-to-large cell pouch implemented in a total thickness of approximately 153 µm.

The outer layer is the outermost layer of the lithium secondary battery packaging material, which is provided on the metal foil gas barrier layer, and thus, may be exposed to the outside, and it is preferable that the outer layer is made from a material having heat resistance, cold resistance, pinhole resistance, insulation properties, chemical resistance, moldability, and the like together with abrasion resistance in order to protect the metal foil gas barrier layer. The outer layer made from such a heat-resistant resin film may include a polyamide-based resin or a polyester-based resin. The polyamide resin may be nylon, which is advantageous for molding due to the high elongation thereof, and the polyester-based resin may be polybuthylene terephthalate (PBT) or polyethylene terephthalate (PET), which may implement high chemical resistance, pinhole resistance, insulation properties, mechanical strength, and the like.

The outer layer may have a thickness of about 15 um to 30 um in consideration of all of sufficient abrasion resistance, heat resistance, pinhole resistance, chemical resistance, moldability, insulation properties, and the like. If the outer layer is too thin, the moldability of the secondary battery packaging material may be degraded due to the lack of strength of the outer layer. On the other hand, if the outer layer is too thick, the inner layer and the metal foil gas barrier layer which are provided under the outer layer should be implemented relatively thin, so that there may be problems such as degradation in thermal adhesion strength, degradation in peel strength between each layer, and the like in the secondary battery packaging material. However, the thickness of the outer layer is not limited to the above-described range, and the outer layer may have a suitable thickness depending on the use of a cell pouch to be implemented, e.g., a thin-film cell pouch implemented in a total thickness of approximately 88 um, a general cell pouch implemented in a total thickness of approximately 113 um, or a medium-to-large cell pouch implemented in a total thickness of approximately 153 µm.

In the present invention, a first adhesive resin layer may be further formed to adhere the outer layer and the metal foil gas barrier layer.

The first adhesive resin layer is formed by an adhesive capable of adhering the outer layer and the metal foil gas barrier layer, and the adhesive used for the formation of the first adhesive resin layer may be a two-liquid curing-type adhesive, or a one-liquid curing-type adhesive. In addition, an adhesive device used for the formation of the first adhesive resin layer is not particularly limited, and the device may be any one selected from devices of chemical reaction type, solvent volatile type, heat melting type, heat pressure type, and the like.

A resin component of the adhesive which may be used for the formation of the first adhesive resin layer may be, for example, a polyester-based resin such as polyethylene terephthalate, polybutylene terephthalate, polyethylene naphthalate, polybutylene naphthalate, polyethylene isophthalate, polycarbonate, and copolymerized polyester; a polyether-based adhesive; a polyurethane-based adhesive; an epoxy-based resin; a phenolic resin; a polyamide-based resin such as nylon 6, nylon 66, nylon 12, and copolymerized polyamide; a polyolefin-based resin such as polyolefin, acid-modified polyolefin, and metal-modified polyolefin; a polyvinyl acetate-based resin; a cellulose-based adhesive; a (meta) acrylic resin; a polyimide-based resin; an amino resin such as urea resin and melamine resin; rubber such as chloroprene rubber, nitrile rubber, and styrene-butadiene rubber; a silicone-based resin; a fluorinated ethylene propylene copolymer, and the like. The above-described adhesive components may be used alone, or in combination of two or more thereof. The combination of two or more types of adhesive components is not particularly limited, but the adhesive component may be, for example, a mixed resin of polyamide and an acid-modified polyolefin, a mixed resin of polyamide and a metal-modified polyolefin, a mixed resin of polyamide and polyester, a mixed resin of polyester and an acid-modified polyolefin, a mixed resin of polyester and a metal-modified polyolefin, and the like. Among them, from the perspective of having excellent flame resistance, durability or suppression of condensation under high humidity conditions, inhibition of thermal deterioration during heat sealing, and effectively suppressing the occurrence of delamination by suppressing the degradation in lamination strength between the outer layer and the metal foil gas barrier layer, it is preferable that a polyurethane-based two-liquid curing-type adhesive, polyamide, polyester, or a blend resin of the polyurethane-based two-liquid curing-type adhesive, the polyamide, or the polyester and a modified polyolefin is used.

Meanwhile, the thickness of the first adhesive resin layer may be, for example, 2 um to 10 µm.

The metal foil gas barrier layer is to block the entry and exit of moisture or air from the outside and a gas generated from the inside, and may come into contact with the inner layer. The metal foil gas barrier layer may include a metal having gas barrier properties and moisture barrier properties, and may include, for example, one or more (single metal or a mixture of single metals) selected from the group consisting of aluminum (Al), iron (Fe), copper (Cu), nickel (Ni), tin (Sn), zinc (Zn), indium (In), tungsten (W), and the like, or an alloy of two or more selected therefrom. As a preferred embodiment, the metal foil gas barrier layer may include aluminum (Al) or an aluminum alloy (Al alloy) in consideration of all of moisture barrier properties, gas barrier properties, and formability. The metal foil gas barrier layer may have a thickness of about 25 um to 45 um, for a sufficient degree of gas barrier properties and moisture barrier properties. However, the thickness of the metal foil gas barrier layer is not limited thereto, and the metal foil gas barrier layer may have a suitable thickness depending on the use of a cell pouch to be implemented, that is, in general, a thin-film cell pouch implemented in a total thickness of approximately 88 um, a general cell pouch implemented in a total thickness of approximately 113 um, or a medium-to-large cell pouch implemented in a total thickness of approximately 153 µm.

For the stabilization of adhesion, prevention of dissolution or corrosion, and the like, it is preferable that at least one side, preferably at least the inner layer side, and preferably both sides of the metal foil gas barrier layer is subjected to chemical conversion. Here, the chemical conversion treatment is a treatment for forming an acid-resistant film on the surface of the metal foil gas blocking layer. The chemical conversion treatment may be, for example, chromic acid chromate treatment using a chromic acid compound such as chromium nitrate, chromium fluoride, chromium sulfate, chromium acetate, chromium oxalate, chromium double phosphate, chromic acid acetylacetate, chromium chloride, and chromium potassium sulfate; phosphoric acid chromate treatment using a phosphoric acid compound such as sodium phosphate, potassium phosphate, ammonium phosphate, and polyphosphoric acid; chromate treatment using an aminated phenol polymer, and the like.

A chemical treatment method for imparting corrosion resistance to the metal foil gas barrier layer may be, for example, a method for forming a corrosion resistance treatment layer on the surface of the metal foil gas barrier layer by coating a metal oxide such as aluminum oxide, titanium oxide, cerium oxide, tin oxide, or the like dispersed in phosphoric acid, or fine particles of barium sulfate dispersed in the same, and then performing sintering at 150 °C or higher. In addition, on the corrosion resistance treatment layer, a resin layer cross-linked using a cationic polymer as a cross-linking agent may be formed. Here, the cationic polymer may be, for example, an ionic polymer complex composed of polyethyleneimine, and a polymer containing polyethyleneimine and carboxylic acid, a primary amine graft acrylic resin in which primary amine is grafted onto an acrylic main skeleton, polyallyl amine or a derivative thereof, aminophenol, or the like. The above-described cationic polymers may be used alone or in combination of two or more thereof. In addition, the cross-linking agent may be, for example, a compound having at least one functional group selected from the group consisting of isocyanate group, glycidyl group, carboxyl group, and oxazoline group, a silane coupling agent, or the like. The above-described cross-linking agents may be used alone, or in combination of two or more thereof.

The chemical conversion treatment may be performed by one type of chemical conversion treatment alone, or may be performed by a combination of two or more types of chemical conversion treatment. In addition, the chemical conversion treatment may be performed by using one type of compound alone, or may be performed by using a combination of two or more types of compounds. Among these, a preferred example may include chromic acid chromate treatment, or preferably chromate treatment using a combination of a chromic acid compound, a phosphoric acid compound, and an aminated phenol polymer.

The chemical conversion treatment is performed by applying a solution containing a compound used for the formation of an acid-resistant film on the surface of the metal foil gas barrier layer by a bar coat method, a roll coat method, a gravure coat method, an immersion method, or the like, and then heating the metal foil to a temperature of about 70 °C to 200 °C.

In the present invention, a second adhesive resin layer may be further formed to adhere the metal foil gas barrier layer and the inner layer.

The second adhesive resin layer may be formed by an adhesive capable of adhering the inner layer and the metal foil gas barrier layer. the adhesive used for the formation of the second adhesive resin layer may be a two-liquid curing-type adhesive, or a one-liquid curing-type adhesive. In addition, an adhesive device used for the formation of the second adhesive resin layer is not particularly limited, and the device may be any one selected from devices of chemical reaction type, solvent volatile type, heat melting type, heat pressure type, and the like.

A resin component of the adhesive which may be used for the formation of the second adhesive resin layer may be, for example, a polyester-based resin such as polyethylene terephthalate, polybutylene terephthalate, polyethylene naphthalate, polybutylene naphthalate, polyethylene isophthalate, polycarbonate, and copolymerized polyester; a polyether-based adhesive; a polyurethane-based adhesive; an epoxy-based resin; a phenolic resin; a polyamide-based resin such as nylon 6, nylon 66, nylon 12, and copolymerized polyamide; a polyolefin-based resin such as polyolefin, acid-modified polyolefin, and metal-modified polyolefin; a polyvinyl acetate-based resin; a cellulose-based adhesive; a (meta) acrylic resin; a polyimide-based resin; an amino resin such as urea resin and melamine resin; rubber such as chloroprene rubber, nitrile rubber, and styrene-butadiene rubber; a silicone-based resin; a fluorinated ethylene propylene copolymer, and the like. The above-described adhesive components may be used alone, or in combination of two or more thereof. The combination of two or more types of adhesive components is not particularly limited, but the adhesive component may be, for example, a mixed resin of polyamide and an acid-modified polyolefin, a mixed resin of polyamide and a metal-modified polyolefin, a mixed resin of polyamide and polyester, a mixed resin of polyester and an acid-modified polyolefin, a mixed resin of polyester and a metal-modified polyolefin, and the like. Among them, from the perspective of having excellent flame resistance, durability or suppression of condensation under high humidity conditions, inhibition of thermal deterioration during heat sealing, and effectively suppressing the occurrence of delamination by suppressing the degradation in lamination strength between the inner layer and the metal foil gas barrier layer, it is preferable that a polyurethane-based two-liquid curing-type adhesive, a polyolefin-based resin, or a blend resin of the polyurethane-based two-liquid curing-type adhesive or the polyolefin-based resin and a modified polyolefin is used.

Meanwhile, the thickness of the second adhesive resin layer may be, for example, 2 um to 60 µm.

A method for preparing the secondary battery packaging material according to the present invention is not particularly limited as long as it is possible to obtain a laminate in which layers each having a predetermined composition are laminated, but the following method is illustrated.

First, a laminate (laminate A) is formed in which an outer layer, a first adhesive resin layer, and a metal foil gas barrier layer are sequentially laminated. The formation of the laminate A is specifically performed by a dry lamination method in which an adhesive used for the formation of the first adhesive resin layer is applied on the metal foil gas barrier layer, the surface of which has been subjected to chemical conversion treatment, by an application method such as an extrusion method, a gravure coat method, a roll coat method, or the like, and then the outer layer is laminated to cure the first adhesive resin layer.

Thereafter, an inner layer is laminated on the metal foil gas barrier layer of the laminate A. If a second adhesive resin layer is to be provided between the metal foil gas barrier layer and the inner layer, for example, (1) a method in which an adhesive used for the formation of a second adhesive resin layer is laminated on the metal foil of the laminate A by a drying method at a high temperature after coating as a solution, and the inner layer formed in advance in the form of a two- or three-layer sheet is laminated on the second adhesive resin layer by a thermal lamination method (dry lamination method), (2) a method in which the inner layer composed of two or three layers is laminated on the metal foil gas barrier layer of the laminate A by co-extrusion (co-extrusion lamination method), (3) a method in which a molten second adhesive resin layer is flown between a metal foil of the laminate A and the inner layer formed in advance in the form of a two- or three-layer sheet to bond the laminate A and the inner layer through the second adhesive resin layer (sand lamination method), and the like may be used.

Hereinafter, the present invention will be described in more detail through specific Examples and Comparative Examples.

### Example 1

A stretched polyamide film (thickness 25 um) as an outer layer and an aluminum thin film (thickness 30 µm), in which a phosphoric acid chromate film was formed on both sides thereof, as a metal foil gas barrier layer were bonded by dry lamination using an adhesive (polyurethane-based two-liquid curing-type adhesive, thickness 3 um). An inner layer was molded in a T-die casting manner. The film obtained by bonding the outer layer and the metal foil gas barrier layer, and the inner layer (thickness 40 µm) made from a composition containing a thermoplastic polyolefin were bonded by dry lamination to obtain a lithium secondary battery packaging material.

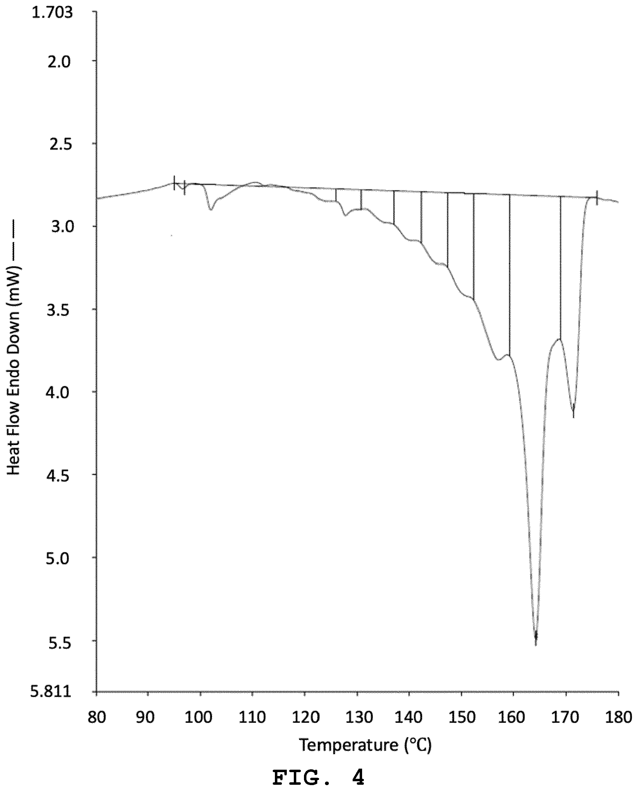

The inner layer made from the composition containing a thermoplastic polyolefin was composed of 1 wt% of maleic anhydride(4 wt%)-modified polypropylene, 54 wt% of homo polypropylene, 25 wt% of ethylene-containing propylene copolymer, and 20 wt% of amorphous propylene rubber, and when subjected to successive self-nucleation and annealing (SSA) measurement using differential scanning calorimetry (DSC), had 12 endothermic peaks in the range of 90 °C to 180 °C in a temperature-calorie curve, and had, based on the sum of the area of all peaks, a region including endothermic peaks below 100 °C in 0.12%, and a region including endothermic peaks above 150 °C in 77.5% (see FIG. 4).

### Example 2

A stretched polyamide film (thickness 25 um) as an outer layer and an aluminum thin film (thickness 30 µm), in which a phosphoric acid chromate film was formed on both sides thereof, as a metal foil gas barrier layer were bonded by dry lamination using an adhesive (polyurethane-based two-liquid curing-type adhesive, thickness 3 um). An inner layer (thickness 40 um) was formed in three layers and bonded in a T-die extrusion coating manner to the above-described film to obtain a lithium secondary battery packaging material.

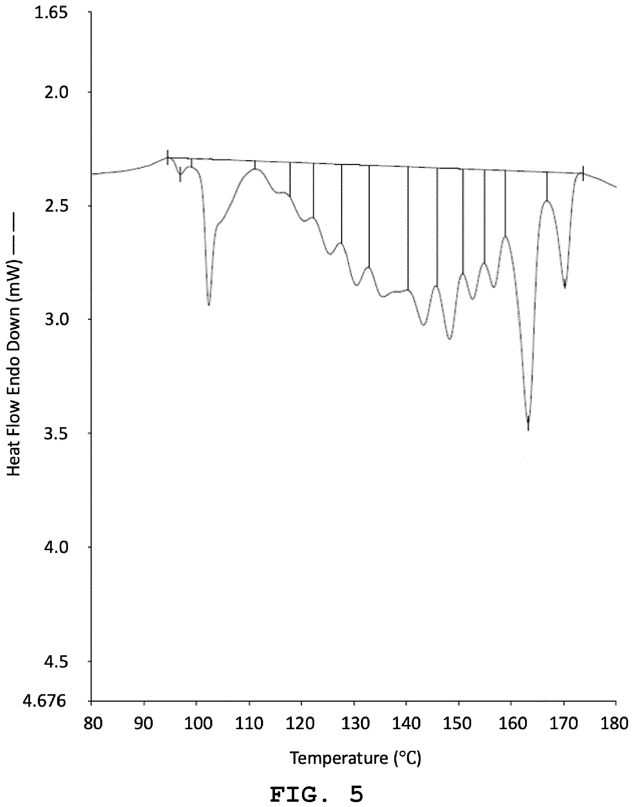

The inner layer made from the composition containing a thermoplastic polyolefin was composed of 5 wt% of maleic anhydride(4 wt%)-modified polypropylene, 5 wt% of homo polypropylene, 35 wt% of ethylene-containing propylene copolymer, 25 wt% of ethylene and butene-containing propylene terpolymer, 12 wt% of low-density polyethylene, and 18 wt% of amorphous propylene rubber, and when subjected to successive self-nucleation and annealing (SSA) measurement using differential scanning calorimetry (DSC), had 13 endothermic peaks in the range of 90 °C to 180 °C in a temperature-calorie curve, and had, based on the sum of the area of all peaks, a region including endothermic peaks below 100 °C in 0.59%, and a region including endothermic peaks above 150 °C in 33% (see FIG. 5).

### Example 3

A stretched polyamide film (thickness 25 um) as an outer layer and an aluminum thin film (thickness 30 µm), in which a phosphoric acid chromate film was formed on both sides thereof, as a metal foil gas barrier layer were bonded by dry lamination using an adhesive (polyurethane-based two-liquid curing-type adhesive, thickness 3 um). An inner layer was formed in three layers and molded in a T-die casting manner. The film obtained by bonding the outer layer and the metal foil gas barrier layer, and the inner layer (thickness 40 µm) made from a composition containing a thermoplastic polyolefin were bonded by dry lamination to obtain a lithium secondary battery packaging material.

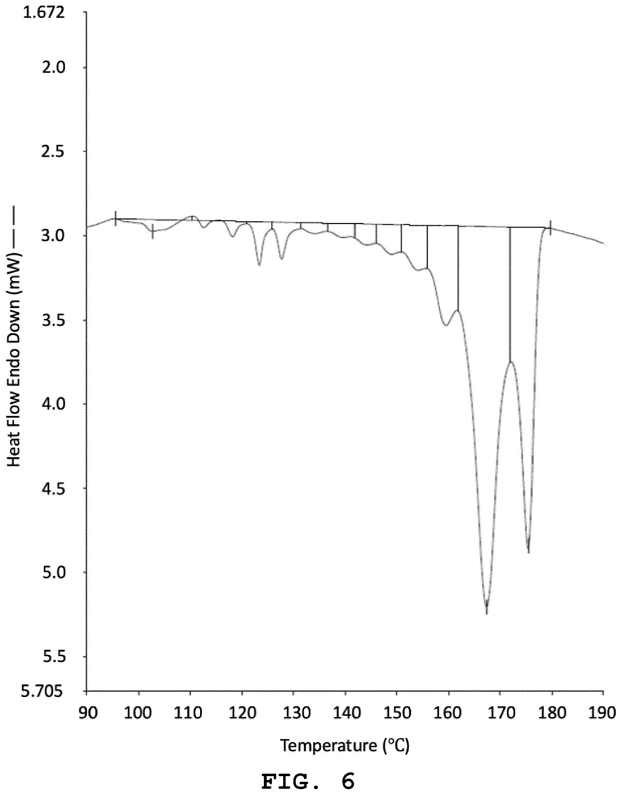

The inner layer made from the composition containing a thermoplastic polyolefin was composed of 1 wt% of maleic anhydride(4 wt%)-modified polypropylene, 44 wt% of homo polypropylene, 20 wt% of linear low-density polyethylene, and 35 wt% of amorphous propylene rubber, and when subjected to successive self-nucleation and annealing (SSA) measurement using differential scanning calorimetry (DSC), had 18 endothermic peaks in the range of 90 °C to 180 °C in a temperature-calorie curve, and had, based on the sum of the area of all peaks, a region including endothermic peaks below 100 °C in 1.21%, and a region including endothermic peaks above 150 °C in 87% (see FIG. 6).

### Example 4

A stretched polyamide film (thickness 25 um) as an outer layer and an aluminum thin film (thickness 30 µm), in which a phosphoric acid chromate film was formed on both sides thereof, as a metal foil gas barrier layer were bonded by dry lamination using an adhesive (polyurethane-based two-liquid curing-type adhesive, thickness 3 um). An inner layer was formed in three layers and molded in a T-die casting manner. The film obtained by bonding the outer layer and the metal foil gas barrier layer, and the inner layer (thickness 40 µm) made from a composition containing a thermoplastic polyolefin were bonded by dry lamination to obtain a lithium secondary battery packaging material.

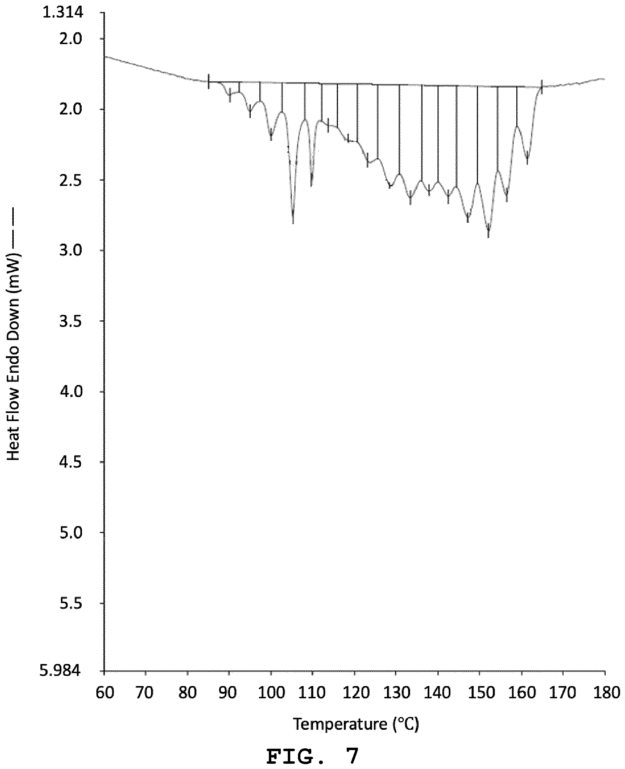

The inner layer made from the composition containing a thermoplastic polyolefin was composed of 1 wt% of maleic anhydride(4 wt%)-modified polypropylene, 29 wt% of homo polypropylene, 35 wt% of ethylene-containing propylene copolymer, 20 wt% of low-density polyethylene, and 15 wt% of amorphous propylene rubber, and when subjected to successive self-nucleation and annealing (SSA) measurement using differential scanning calorimetry (DSC), had 12 endothermic peaks in the range of 90 °C to 180 °C in a temperature-calorie curve, and had, based on the sum of the area of all peaks, a region including endothermic peaks below 100 °C in 0.83%, and a region including endothermic peaks above 150 °C in 22.3% (see FIG. 7).

### Comparative Example 1

A stretched polyamide film (thickness 25 um) as an outer layer and an aluminum thin film (thickness 30 µm), in which a phosphoric acid chromate film was formed on both sides thereof, as a metal foil gas barrier layer were bonded by dry lamination using an adhesive (polyurethane-based two-liquid curing-type adhesive, thickness 3 µm). An inner layer (thickness 40 um) was formed in three layers and bonded in a T-die extrusion coating manner to the above-described film to obtain a lithium secondary battery packaging material.

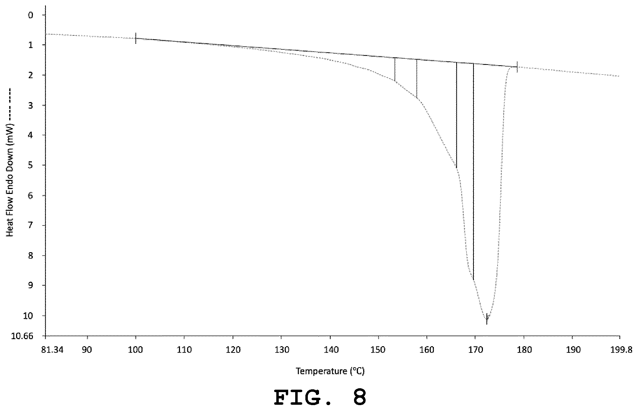

The inner layer made from the composition containing a thermoplastic polyolefin did not include maleic anhydride-modified polypropylene, and was composed 85 wt% of homo polypropylene and 15 wt% of amorphous propylene rubber, and when subjected to successive self-nucleation and annealing (SSA) measurement using differential scanning calorimetry (DSC), had one endothermic peak in a temperature-calorie curve, and had, based on the sum of the area of all peaks, a region including endothermic peaks below 100 °C in 0%, and a region including endothermic peaks above 150 °C in 91.2% (see FIG. 8) .

### Comparative Example 2

A stretched polyamide film (thickness 25 um) as an outer layer and an aluminum thin film (thickness 30 µm), in which a phosphoric acid chromate film was formed on both sides thereof, as a metal foil gas barrier layer were bonded by dry lamination using an adhesive (polyurethane-based two-liquid curing-type adhesive, thickness 3 µm). An inner layer (thickness 40 um) was formed in three layers and bonded in a T-die extrusion coating manner to the above-described film to obtain a lithium secondary battery packaging material.

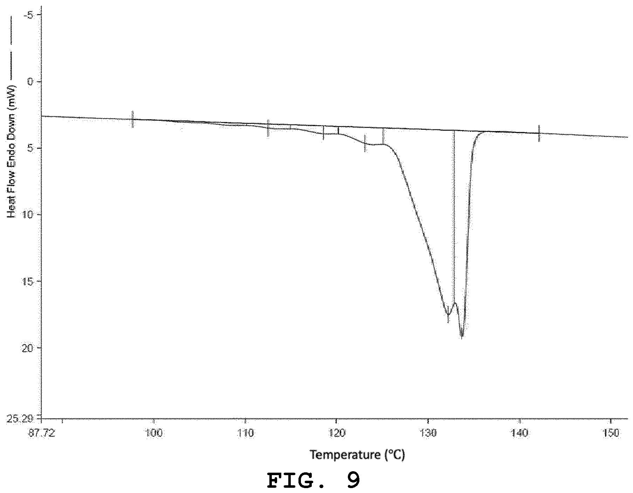

The inner layer made from the composition containing a thermoplastic polyolefin did not include maleic anhydride-modified polypropylene, and was composed 90 wt% of ethylene and butene-containing propylene terpolymer and 10 wt% of amorphous propylene rubber, and when subjected to successive self-nucleation and annealing (SSA) measurement using differential scanning calorimetry (DSC), had one endothermic peak in a temperature-calorie curve, and had, based on the sum of the area of all peaks, a region including endothermic peaks below 100 °C in 0%, and a region including endothermic peaks above 150 °C in 0% (see FIG. 9).

### Test Example

The prepared package material was used to prepare specimens and to measure or evaluate physical properties of the specimens according to a method below, and the results are shown in Table 1 below.

[Method for measuring or evaluating physical properties]

### (1) Aluminum peel strength

The prepared packaging material was cured at 50 °C for 14 days, and then cut to a width of 15 mm to measure the peel strength at a peel angle of 180° at a peel rate of 50 mm/min at 23 °C.

### (2) Thermal adhesion strength

Inner layer films of the prepared packaging material were brought into contact and thermally bonded under the conditions of 200 °C, 2 kgf, and 1 s, and then cut to a width of 15 mm to measure the peel strength at a peel angle of 180° and 160° at a peel rate of 100 mm/min at 23 °C.

### (3) Anti-electrolyte solution properties

The specimen used for measuring the thermal adhesion strength was immersed in an electrolyte solution at 85 °C for 75 hours, and then the peel strength thereof was measured in the same manner as in the method for measuring the thermal adhesion strength, and if the peel strength after the electrolyte solution immersion compared to the peel strength before the electrolyte solution immersion was maintained at 90% or more, it was denoted by '⊚,' if maintained at 70% or more to less than 90%, it was denoted '△.' and if maintained at 70% or less, it was denoted by 'X.' The composition of the electrolyte solution was [EC/DEC/DMC=1/1/1(v/v%) + LiPF6(1 mol/L) + H₂O 300 ppm], wherein EC is ethylene carbonate, DEC is diethyl carbonate, DMC is dimethyl carbonate.

### (4) Forming performance

The above-prepared packaging material was placed on a frame-type metal mold (10 cm X 10 cm) with the outer layer touching an edge of the mold, and the inner layer film surface was pressed with a square pendulum to perform drawing 5 times up to a depth of at least 6 mm, and if there was 0 burst in a corner portion of the packaging material, it was denoted by '⊚,' if there were 1 to 3 bursts, it was denoted by '△,' and if here were 4 bursts, it was denoted by 'X.'

**[Table 1]**

| Classifi cation | Aluminum peel force (N/15mm) | Thermal adhesion strength (N/ 15mm) | | Anti-electrolyte solution properties | Forming performance |
|---|---|---|---|---|---|
| | | 180°C | 160°C | | |
| Example 1 | 9.9 | 105 | 95 | ⊚ | ⊚ |
| Example 2 | 11.1 | 120 | 110 | ⊚ | ⊚ |
| Example 3 | 11.4 | 100 | 90 | ⊚ | ⊚ |
| Example 4 | 12.0 | 140 | 120 | ⊚ | ⊚ |
| Comparat ive Example 1 | 4.8 | 80 | 40 | X | X |
| Comparat ive Example 2 | 4.6 | 70 | 65 | X | Δ |

Referring to Table 1, in the lithium secondary battery packaging material according to the present invention, if the inner layer made from the composition containing a thermoplastic polyolefin includes at least one type of acid-modified polypropylene, and when measured according to successive self-nucleation and annealing, has at least three endothermic peaks in the range of 90 °C to 180 °C in a temperature-calorie curve, and based on the sum of the area of all peaks, has a region including endothermic peaks below 100 °C in not more than 10%, and a region including endothermic peaks above 150 °C in more than 20% but less than 90%, it can be confirmed that excellent thermal adhesion performance and excellent performance in peel strength between materials of each layer (aluminum peel strength, anti-electrolyte properties) are exhibited. In addition, the composition has multiple endothermic phase transitions in the range of 90 °C to 180 °C, and thus, may be bonded under a wide range of bonding temperature conditions. In addition, it can be confirmed that the composition has a region including endothermic peaks above 150 °C in more than 20% but less than 90%, and thus, has mechanical rigidity and heat resistance, thereby having excellent thermal adhesion strength after the inner layer is thermally adhered.

On the contrary, Comparative Example 1 has a relatively high endothermic phase transition at a high temperature than Examples. It can be confirmed that since a thermal-annealing region of the thermoplastic polyolefin constituting the inner layer was reduced at a relatively low heat-sealing temperature, the heat adhesion was not sufficiently achieved, and in addition, it can be confirmed that since maleic acid modified polypropylene anhydride was not included, the bonding to a metal was not sufficiently achieved, which reduced the aluminum peel strength and anti-electrolyte solution properties. In addition, it can be confirmed that the thermoplastic polyolefin has a high degree of crystallization in a region showing endothermic phase transition at a high temperature, and has good mechanical rigidity due to the high degree of crystallization, but has degraded forming performance.

Comparative Example 2 shows an endothermic phase transition of 100% in a region of 100 °C to 140 °C, and is able to be bonded at a relatively low temperature range. However, it can be seen that a region showing endothermic phase transition is in a low temperature section compared to Examples, and the crystallinity of the thermoplastic polyolefin forming the same is relatively low, and the mechanical rigidity is insufficient in that there is no endothermic peak in a section above 150 °C, which also affects the low peel strength after heat adhesion. In addition, as in Comparative Example 1, it can be confirmed that since maleic acid modified polypropylene anhydride was not included, the adhesion to a metal was not sufficiently achieved, which reduced the aluminum peel strength and anti-electrolyte solution properties. However, due to a relatively low degree of crystallization, it can be confirmed that the forming properties due to an amorphous region are improved compared to Comparative Example 1.

The preferred embodiments of the present invention have been described in detail. The description of the present invention has been presented for purposes of illustration, and it will be understood by those skilled in the art that various changes in form and details may be made therein without departing from the spirit and scope of the invention.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A secondary battery packaging material having a layered structure comprising:
an outer layer made from a heat-resistant resin film;
a metal foil gas barrier layer; and
an inner layer made from a composition containing a thermoplastic polyolefin,
wherein the composition constituting the inner layer has at least three endothermic peaks in a temperature-calorie curve when measured by successive self-nucleation and annealing (SSA) using differential scanning calorimetry (DSC), wherein the endothermic peaks appear in the range of 90 °C to 180 °C.

2. The packaging material of claim 1, wherein when analyzed by the successive self-nucleation and annealing, the composition constituting the inner layer has, based on the sum of the area of all peaks, a region including endothermic peaks below 100 °C in not more than 10%, and a region including endothermic peaks above 150 °C in more than 20% but less than 90%.

3. The packaging material of claim 1, wherein the composition constituting the inner layer comprises at least one type of acid-modified polypropylene.

4. The packaging material of claim 3, wherein the acid-modified polypropylene is a modified polypropylene grafted with 1 wt% to 10 wt% of maleic anhydride.

5. The packaging material of claim 1, wherein the heat-resistant resin is a polyamide-based resin or a polyester-based resin.

6. The packaging material of claim 1, wherein the metal foil comprises at least one metal selected from the group consisting of aluminum (Al), iron (Fe), copper (Cu), nickel (Ni), tin (Sn), zinc (Zn), indium (In), and tungsten (W).

7. The packaging material of claim 1, wherein the thickness of the outer layer is 15 µm to 30 µm, the thickness of the metal foil gas barrier layer is 25 µm to 45 µm, and the thickness of the inner layer is 25 um to 120 um.
